# EUROPÄISCHE PATENTSCHRIFT

(11) **EP 3 256 355 B1**
(45) Veröffentlichungstag und Bekanntmachung des Hinweises auf die Patenterteilung: **02.12.2020**
(21) Anmeldenummer: 16700817.6
(22) Anmeldetag: 15.01.2016
(51) Int. Cl.: B60T 13/66, B60T 13/68, B60T 8/88, B60T 17/22

(54) **STEUERVORRICHTUNG UND VERFAHREN ZUM BETREIBEN EINES BREMSSYSTEMS EINES FAHRZEUGS**
CONTROL DEVICE AND METHOD FOR OPERATING A BRAKE SYSTEM OF A VEHICLE
DISPOSITIF DE COMMANDE ET PROCÉDÉ PERMETTANT DE FAIRE FONCTIONNER UN SYSTÈME DE FREINAGE D'UN VÉHICULE

(30) Priorität: 10.02.2015 DE 102015202337
(43) Veröffentlichungstag der Anmeldung: 20.12.2017
(73) Patentinhaber: Robert Bosch GmbH, 70442 Stuttgart (DE)
(72) Erfinder: FEINAUER, Jochen, 74632 Neuenstein (DE); KUNZ, Michael, 71711 Steinheim An Der Murr (DE); STRENGERT, Stefan, 70469 Stuttgart (DE)
(86) Internationale Anmeldenummer: PCT/EP2016/050783
(87) Internationale Veröffentlichungsnummer: WO 2016/128172

(56) Entgegenhaltungen:
- DE-A1-102012 205 859
- DE-A1-102012 210 809
- DE-A1-102013 208 671
- DE-A1-102014 200 071

## Beschreibung

Die Erfindung betrifft ein Bremssystem für ein Fahrzeug und ein Fahrzeug, welches zum automatisierten Fahren ausgelegt ist. Des Weiteren betrifft die Erfindung ein Verfahren zum Betreiben eines Bremssystems eines Fahrzeugs und ein Verfahren zum automatisierten Fahren eines Fahrzeugs.

### Stand der Technik

In der DE 10 2013 203 824 A1 sind eine Steuervorrichtung für ein Bremssystem eines Fahrzeugs und ein Verfahren zum Betreiben eines Bremssystems eines Fahrzeugs beschrieben. Bei einer Nutzung der Steuervorrichtung, bzw. einem Ausführen des entsprechenden Verfahrens, werden zumindest eine erste hydraulische Komponente des jeweiligen Bremssystems und eine zweite hydraulische Komponente des gleichen Bremssystems gemäß einem auszuführenden Soll-Betriebsmodus angesteuert, wodurch in den Radbremszylinder des Bremssystems mindestens ein Bremsdruck entsprechend einer Bremsvorgabe einstellbar sein soll. Zuvor wird der auszuführende Soll-Betriebsmodus aus mindestens zwei ausführbaren Betriebsmoden ausgewählt. Insbesondere werden beim Auswählen des auszuführenden Soll-Betriebsmodus ein Fahrzeugtyp des mit dem jeweiligen Bremssystem ausgestatteten Fahrzeugs und/oder ein Typ mindestens einer Komponente des Bremssystems berücksichtigt.

Die DE 10 2014 200 071 A1 und die DE 10 2012 210 809 A1 beschreiben Bremsanlagen für ein Kraftfahrzeug, welche jeweils mit einer Plungervorrichtung als Fremdkraftbremse ausgestattet sind. Außerdem weist jede der Bremsanlagen noch eine alternativ zu der Plungervorrichtung für eine Fremdkraftbremsung einsetzbare Pumpvorrichtung auf.

### Offenbarung der Erfindung

Die Erfindung schafft ein Bremssystem für ein Fahrzeug mit den Merkmalen des Anspruchs 1, ein zum automatisierten Fahren ausgelegtes Fahrzeug mit den Merkmalen des Anspruchs 7, ein Verfahren zum Betreiben eines Bremssystems eines Fahrzeugs mit den Merkmalen des Anspruchs 8 und ein Verfahren zum automatisierten Fahren eines Fahrzeugs mit den Merkmalen des Anspruchs 12.

### Vorteile der Erfindung

Mittels der vorliegenden Erfindung können eine Funktionsbeeinträchtigung/ein Ausfall der mindestens einen Hydraulikeinrichtung des Bremssystems oder des Bremskraftverstärkers des Bremssystems schnell und verlässlich kompensiert werden. Beispielsweise kann bei einer Nutzung der vorliegenden Erfindung der Bremskraftverstärker selbst bei einem Totalausfall der mindestens einen Hydraulikeinrichtung des Bremssystems die Bremsvorgabe noch verlässlich ausführen. Ebenso kann ein Totalausfall des Bremskraftverstärkers kompensiert werden, indem mittels der mindestens einen Hydraulikeinrichtung die Bremsvorgabe schnell und verlässlich ausgeführt wird. Die vorliegende Erfindung trägt somit zur Steigerung eines Sicherheitsstandards des auf diese Weise realisierten Bremssystems bei.

Die vorliegende Erfindung schafft insbesondere einen verbesserten Sicherheitsstandard für ein zum automatisierten Fahren ausgelegtes Fahrzeugs. Bei einem Ausführen einer autonomen Bremsung (d.h. einer ohne eine Betätigung des Bremsbetätigungselements durch den Fahrer von der Steuerautomatik angeforderten Bremsung) kann eine Funktionsbeeinträchtigung/ein Ausfall der mindestens einen Hydraulikeinrichtung vorteilhaft mittels des Bremskraftverstärkers kompensiert werden. Ebenso kann eine Funktionsbeeinträchtigung/ein Ausfall des Bremskraftverstärkers mittels der mindestens einen Hydraulikeinrichtung aufgefangen werden. Somit ist selbst für den Fall, dass die mindestens eine Hydraulikeinrichtung eine vergleichsweise hohe erste Ausfallrate und/oder der Bremskraftverstärker eine relativ hohe zweite Ausfallrate aufweisen, die angeforderte autonome Bremsung mit einer hohen Wahrscheinlichkeit noch ausführbar. Damit ist eine Kernanforderung für ein automatisiertes/hochautomatisiertes Fahren erfüllt.

Beispielsweise kann die Elektronikeinrichtung zumindest dazu ausgelegt sein, unter Berücksichtigung der Bremsvorgabe, der mindestens einen ersten Information und der mindestens einer zweiten Information wahlweise zu entscheiden, ob die jeweilige Bremsdrucksteigerung zu 100% mittels der mindestens einen Hydraulikeinrichtung und zu 0% mittels des Bremskraftverstärkers oder zu 0% mittels der mindestens einen Hydraulikeinrichtung und zu 100% mittels des Bremskraftverstärkers zu erfüllen ist. Als optionale Weiterbildung kann die Elektronikeinrichtung auch dazu ausgelegt sein, dass die jeweilige Bremsdrucksteigerung zu x% mittels der mindestens einen Hydraulikeinrichtung 10 und zu (100-x)% mittels des Bremskraftverstärkers 12 zu erfüllen ist, wobei für x mindestens ein Wert zwischen 0 und 100 stehen kann. (x kann auch gleich 0 und/oder 100 sein.) Damit besteht eine hohe Flexibilität zum Reagieren auf Situationen, in denen die mindestens eine Hydraulikeinrichtung oder der Bremskraftverstärker nur noch limitiert oder nicht mehr einsetzbar sind.

In einer vorteilhaften Ausführungsform kann die Elektronikeinrichtung dazu ausgelegt sein, zumindest unter Berücksichtigung eines ersten Signals bezüglich einer Bereitstellung mindestens eines ersten Versorgungsstroms an die mindestens eine Hydraulikeinrichtung als die mindestens eine erste Information und/oder eines zweiten Signals bezüglich einer Bereitstellung eines zweiten Versorgungsstroms an den Bremskraftverstärker als die mindestens eine zweite Information zu entscheiden, zu welchem ersten Soll-Anteil die jeweilige Bremsdrucksteigerung mittels der mindestens einen Hydraulikeinrichtung und zu welchem zweiten Soll-Anteil die jeweilige Bremsdrucksteigerung mittels des Bremskraftverstärkers zu erfüllen ist. Die Elektronikeinrichtung kann somit schnell auf eine unzureichende Stromversorgung/Energieversorgung der mindestens einen Hydraulikeinrichtung oder des Bremskraftverstärkers reagieren.

In einer vorteilhaften Ausführungsform des Bremssystems ist die mindestens eine Hydraulikeinrichtung in ein ESP-System des Bremssystems integriert. Vorzugsweise ist in diesem Fall eine erste Untereinheit der Steuervorrichtung in eine ESP-Steuereinrichtung des ESP-Systems integriert. Alternativ oder ergänzend kann eine zweite Untereinheit der Steuervorrichtung in eine Bremskraftverstärker-Steuereinrichtung des Bremskraftverstärkers integriert sein. Optionaler Weise kann noch zumindest eine dritte Untereinheit der Steuervorrichtung in eine andere Einrichtung, wie zum Beispiel einer Antriebsstrang-Steuereinrichtung eines Antriebsstrangs des Fahrzeugs, integriert sein. Damit ist es nicht notwendig, für die Steuervorrichtung ein eigenes Gehäuse auszubilden.

Vorzugsweise ist die mindestens eine Hydraulikeinrichtung an einem in dem Bremssystem ausgebildeten ersten Stromversorgungsnetz oder Stromversorgungsnetzteil angebunden, über welches die mindestens eine Hydraulikeinrichtung an einer ersten Energiequelle des Fahrzeugs anbindbar oder angebunden ist, während der Bremskraftverstärker an einem in dem Bremssystem ausgebildeten zweiten Stromversorgungsnetz oder Stromversorgungsnetzteil angebunden ist, über welches der Bremskraftverstärker an einer zweiten Energiequelle des Fahrzeugs anbindbar oder angebunden ist. Ein Ausfall der ersten Energiequelle und die damit verbundene Funktionsbeeinträchtigung der mindestens einen Hydraulikeinrichtung sind somit mittels der weiteren gewährleisteten Funktionsfähigkeit des Bremskraftverstärkers kompensierbar. Entsprechend ist auch ein Ausfall der zweiten Energiequelle, welche eine Funktionsbeeinträchtigung des Bremskraftverstärkers auslöst, aufgrund mindestens eines weiterhin an die mindestens eine Hydraulikeinrichtung bereitgestellten ersten Versorgungsstroms noch kompensierbar.

In einer weiteren vorteilhaften Ausführungsform des Bremssystems ist die Elektronikeinrichtung zusätzlich dazu ausgelegt, zu entscheiden, ob ein Stillstand des Fahrzeugs mittels einer automatischen Parkbremse oder durch Verriegeln eines Getriebes des Fahrzeugs mittels einer Parkklinke zu sichern ist, und die automatische Parkbremse oder die Parkklinge entsprechend anzusteuern, wobei die automatische Parkbremse ebenfalls an dem ersten Stromversorgungsnetz oder Stromversorgungsnetzteil angebunden ist, während die Parkklinke ebenfalls an dem zweiten Stromversorgungsnetz oder Stromversorgungsnetzteil angebunden ist. Eine durch einen Ausfall der ersten Energiequelle ausgelöste Funktionsbeeinträchtigung der automatischen Parkbremse kann somit mittels der Parkklinke kompensiert werden. Entsprechend kann auch eine durch einen Ausfall der zweiten Energiequelle ausgelöste Funktionsbeeinträchtigung der Parkklinke mittels der automatischen Parkbremse kompensiert werden.

Die oben ausgeführten Vorteile sind auch bei einem Fahrzeug, welches zum automatisierten Fahren ausgelegt ist, durch sein entsprechendes Bremssystem gewährleistet. Das Fahrzeug umfasst zusätzlich die Steuerautomatik, welche dazu ausgelegt ist, unter Berücksichtigung mindestens eines Sensorsignals mindestens eines Umgebungserfassungssensors des Fahrzeugs eine Soll-Trajektorie des Fahrzeugs festzulegen, und anhand der festgelegten Soll-Trajektorie und einer aktuellen Geschwindigkeit des Fahrzeugs die Bremsvorgabe festzulegen und an die Steuervorrichtung auszugeben.

Die oben beschriebenen Vorteile sind auch durch ein Ausführen eines korrespondierenden Verfahrens zum Betreiben eines Bremssystems eines Fahrzeugs realisierbar. Das Verfahren ist entsprechend den oben beschriebenen Ausführungsformen des Bremssystems weiterbildbar.

In einer vorteilhaften Ausführungsform des Verfahrens wird als die mindestens eine erste Information zumindest ermittelt, ob mindestens ein erster Versorgungsstrom an die mindestens eine Hydraulikeinrichtung bereitgestellt wird, und/oder als die mindestens eine zweite Information wird zumindest ermittelt, ob ein zweiter Versorgungsstrom an den Bremskraftverstärker bereitstellt wird. Beispielsweise kann als die mindestens eine erste Information zumindest ermittelt werden, ob eine erste Energiequelle des Fahrzeugs, welche über ein erstes Stromversorgungsnetz mit der mindestens einen Hydraulikeinrichtung verbunden ist, ausgefallen ist, und/oder als die mindestens eine zweite Information kann zumindest ermittelt werden, ob eine zweite Energiequelle des Fahrzeugs, welche über ein zweites Stromversorgungsnetz mit dem Bremskraftverstärker verbunden ist, ausgefallen ist. Auf die entsprechende Information kann anschließend mittels einer optimierten Entscheidung bezüglich des ersten Soll-Anteils der jeweiligen Bremsdrucksteigerung (mittels der mindestens einen Hydraulikeinrichtung) und des zweiten Soll-Anteils der jeweiligen Bremsdrucksteigerung (mittels des Bremskraftverstärkers) reagiert werden.

Als vorteilhafte Weiterbildung des Verfahrens kann zusätzlich entschieden werden, ob ein Stillstand des Fahrzeugs mittels einer automatischen Parkbremse oder durch Verriegeln eines Getriebes des Fahrzeugs mittels einer Parkklinke gesichert wird. Damit ist selbst bei einem Ausfall einer der beiden Energiequellen des Fahrzeugs ein unerwünschtes Wegrollen des Fahrzeugs verlässlich verhinderbar.

Auch ein Ausführen des Verfahrens zum automatisierten Fahren eines Fahrzeugs schafft die oben beschriebenen Vorteile. Es wird darauf hingewiesen, dass das Verfahren zum automatisierten Fahren eines Fahrzeugs gemäß den zuvor beschriebenen Ausführungsformen des Verfahrens zum Betreiben eines Bremssystems weiterbildbar ist.

### Kurze Beschreibung der Zeichnungen

Weitere Merkmale und Vorteile der vorliegenden Erfindung werden nachfolgend anhand der Figuren erläutert. Es zeigen:
- Fig. 1: eine schematische Darstellung einer Ausführungsform des Bremssystems; und
- Fig. 2: ein Flussdiagramm zum Erläutern einer Ausführungsform des Verfahrens zum Betreiben eines Bremssystems eines Fahrzeugs.

### Ausführungsformen der Erfindung

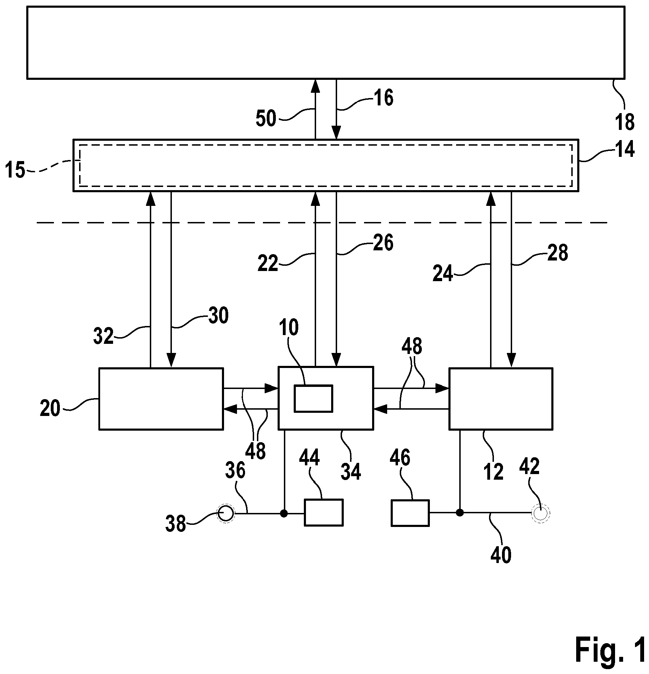

Fig. 1 zeigt eine schematische Darstellung einer Ausführungsform des Bremssystems.

Das in Fig. 1 schematisch dargestellte Bremssystem ist in einem Fahrzeug/Kraftfahrzeug einsetzbar. Insbesondere kann ein zum automatisierten Fahren ausgelegtes Fahrzeug/Kraftfahrzeug mit dem Bremssystem der Fig. 1 ausgestattet sein. Es wird jedoch darauf hingewiesen, dass eine Verwendbarkeit des Bremssystems der Fig. 1 nicht auf einen bestimmten Fahrzeugtyp/Kraftfahrzeugtyp limitiert ist.

Das Bremssystem der Fig. 1 umfasst mindestens einen Radbremszylinder, welcher jedoch der besseren Übersichtlichkeit wegen nicht dargestellt ist. Beispielsweise kann der mindestens eine Radbremszylinder über mindestens einen Bremskreis an einem (nicht skizzierten) Hauptbremszylinder des Bremssystems angebunden sein. Es wird darauf hingewiesen, dass eine Realisierbarkeit des im Weiteren beschriebenen Bremssystems weder auf eine bestimmte Anzahl von dessen Radbremszylindern, einen bestimmten Radbremszylindertyp, eine Ausstattung mit dem Hauptbremszylinder oder auf einen bestimmten Hauptbremszylindertyp limitiert ist.

Das Bremssystem hat auch mindestens eine Hydraulikeinrichtung 10, wobei mittels (eines Betriebs) der mindestens einen Hydraulikeinrichtung 10 mindestens ein Bremsdruck in dem mindestens einen Radbremszylinder steigerbar ist. Die mindestens eine Hydraulikeinrichtung 10 kann beispielsweise mindestens eine Pumpe und/oder mindestens eine motorisierte Kolben-ZylinderVorrichtung sein. Insbesondere können mehrere Pumpen des Bremssystems und/oder mehrere Kolben-Zylinder-Vorrichtungen des Bremssystems, auch alle Pumpen des Bremssystems und/oder alle Kolben-Zylinder-Vorrichtungen des Bremssystems, im Weiteren unter der mindestens einen Hydraulikeinrichtung 10 verstanden werden. Die Darstellung von lediglich der einen Hydraulikeinrichtung 10 in Fig. 1 ist somit nur beispielhaft zu interpretieren. Ebenso ist eine Ausbildbarkeit der mindestens einen Hydraulikeinrichtung 10 nicht auf die mindestens eine Pumpe und/oder die mindestens eine motorisierte Kolben-Zylinder-Vorrichtung beschränkt.

Das Bremssystem weist auch einen Bremskraftverstärker 12 auf. Vorzugsweise ist der Bremskraftverstärker 12 ein elektromechanischer Bremskraftverstärker. Es wird jedoch darauf hingewiesen, dass eine Ausbildbarkeit des Bremssystems nicht auf einem bestimmten Bremskraftverstärkertyp des Bremskraftverstärkers 12 limitiert ist.

Außerdem hat das Bremssystem eine Steuervorrichtung 14 mit einer Elektronikeinrichtung 15. Die Elektronikeinrichtung 15 ist dazu ausgelegt, zumindest unter Berücksichtigung einer Bremsvorgabe 16 eines Fahrers des Fahrzeugs oder einer Steuerautomatik 18 des Fahrzeugs die mindestens eine Hydraulikeinrichtung 10 und/oder den Bremskraftverstärker 12 anzusteuern. Bevorzugt ist es, wenn mittels des Ansteuerns der mindestens einen Hydraulikeinrichtung 10 und/oder des Bremskraftverstärkers 12 durch die Elektronikeinrichtung 15 mindestens eine Bremsdrucksteigerung in dem mindestens einen Radbremszylinder entsprechend der Bremsvorgabe 16 bewirkbar ist. Darunter kann verstanden werden, dass aus der mindestens einen Bremsdrucksteigerung in dem mindestens einen Radbremszylinder eine Gesamt-Verzögerung des Fahrzeugs resultiert, welche der Bremsvorgabe 16 entspricht. Evtl. kann die mindestens eine Bremsdrucksteigerung in dem mindestens einen Radbremszylinder auch so realisierbar sein, dass die (aus der mindestens einen Bremsdrucksteigerung) resultierende Verzögerung des Fahrzeugs zusammen mit einem Generator-Bremsmoment mindestens eines generatorisch eingesetzten elektrischen Motors 20 der Bremsvorgabe 16 entspricht. Die jeweilige Bremsdrucksteigerung in dem mindestens einen Radbremszylinder kann radbremszylinder-spezifisch, bremskreisspezifisch oder für alle Radbremszylinder gleich bewirkbar sein.

Vor Allem ist die Elektronikeinrichtung 15 dazu ausgelegt, zu entscheiden, zu welchem ersten Soll-Anteil die jeweilige Bremsdrucksteigerung mittels (eines Betriebs) der mindestens einen Hydraulikeinrichtung 10 und zu welchem zweiten Soll-Anteil die jeweilige Bremsdrucksteigerung mittels (eines Betriebs) des Bremskraftverstärkers 12 zu erfüllen ist. Diese Entscheidung erfolgt unter Berücksichtigung der Bremsvorgabe 16 und unter zusätzlicher Berücksichtigung mindestens einer ersten Information 22 bezüglich einer aktuellen Einsatzfähigkeit der mindestens einen Hydraulikeinrichtung 10 und mindestens einer zweiten Information 24 bezüglich einer aktuellen Einsatzfähigkeit des Bremskraftverstärkers 12. Anschließend ist die Elektronikeinrichtung 15 dazu ausgelegt, die mindestens eine Hydraulikeinrichtung 10 (mittels mindestens eines ersten Steuersignals 26) und/oder den Bremskraftverstärker 12 (mittels mindestens eines zweiten Steuersignals 28) derart anzusteuern, dass die jeweilige Bremsdrucksteigerung zu dem ersten Soll-Anteil mittels des Betriebs der mindestens einen Hydraulikeinrichtung 10 und zu dem zweiten Soll-Anteil mittels des Betriebs des Bremskraftverstärkers 12 erfüllbar ist.

Bei dem Bremssystem der Fig. 1 kann somit für jede Bremsvorgabe 16 (frei) entschieden werden, ob zu ihrer Ausführung mehr/nur die mindestens eine Hydraulikeinrichtung 10 und weniger/nicht der Bremskraftverstärker 12 einzusetzen ist, oder, ob zu ihrer Ausführung mehr/nur der Bremskraftverstärker 12 und weniger/nicht die mindestens eine Hydraulikeinrichtung 10 einzusetzen ist. Durch die Berücksichtigung der mindestens einen ersten Information 22 und mindestens einen zweiten Information 24 bei der Entscheidung ist sicherstellbar, dass das nachfolgende Ansteuern der mindestens einen Hydraulikeinrichtung 10 (mittels des mindestens einen ersten Steuersignals 26) und/oder des Bremskraftverstärkers 12 (mittels des mindestens einen zweiten Steuersignals 28) in Hinblick auf die aktuelle Einsatzfähigkeit der mindestens einen Hydraulikeinrichtung 10 und die aktuelle Einsatzfähigkeit des Bremskraftverstärkers 12 optimiert ist. Insbesondere kann ein zum Bewirken der jeweiligen Bremsdrucksteigerung zu leistenden Arbeitsaufwands gezielt zwischen der mindestens einen Hydraulikeinrichtung 10 und dem Bremskraftverstärker 12 so aufgeteilt werden, dass eine verminderte/entfallene Einsatzfähigkeit der mindestens einen Hydraulikeinrichtung 10 oder des Bremskraftverstärkers 12 ausgleichbar ist. Die gewünschte (die Bremsvorgabe 16 erfüllende) Bremsdrucksteigerung ist in dem mindestens einen Radbremszylinder (radbremszylinder-spezifisch, bremskreisspezifisch oder für alle Radbremszylinder gleich) auch in solchen Situationen realisierbar, in denen die mindestens eine Hydraulikeinrichtung 10 oder der Bremskraftverstärker 12 kaum/nicht einsetzbar sind.

Es wird darauf hingewiesen, dass unter dem Entscheiden, zu welchem ersten Soll-Anteil die jeweilige Bremsdrucksteigerung mittels der mindestens einen Hydraulikeinrichtung 10 und zu welchem zweiten Soll-Anteil die jeweilige Bremsdrucksteigerung mittels des Bremskraftverstärkers 12 zu erfüllen ist, nicht unbedingt ein Festlegen des ersten Soll-Anteils und/oder des zweiten Soll-Anteils zu verstehen ist. Stattdessen kann mittels der Elektronikeinrichtung 15 auch mindestens eine erste Soll-Betriebsgröße der mindestens einen Hydraulikeinrichtung 10 und/oder mindestens eine zweite Soll-Betriebsgröße des Bremskraftverstärkers 12 festlegbar/auswählbar sein. Die mindestens eine erste Soll-Betriebsgröße der mindestens einen Hydraulikeinrichtung 10 kann beispielsweise mindestens ein erster Soll-Versorgungsstrom der mindestens einen Hydraulikeinrichtung 10 und/oder mindestens eine Soll-Drehzahl der mindestens einen Hydraulikeinrichtung 10 sein. Entsprechend können die mindestens eine zweite Soll-Betriebsgröße des Bremskraftverstärkers 12 ein zweiter Soll-Versorgungsstrom des Bremskraftverstärkers 12 und/oder eine Soll-Motordrehzahl eines Motors des Bremskraftverstärkers 12 sein. Die mindestens eine erste Soll-Betriebsgröße und die mindestens eine zweite Soll-Betriebsgröße sind jedoch nicht auf die hier genannten Beispiele limitiert. Ebenso kann unter der Entscheidung auch ein Auswählen/Festlegen mindestens eines Soll-Betriebsmodus der mindestens einen Hydraulikeinrichtung 10 und des Bremskraftverstärkers 12 verstanden werden.

Beispielsweise ist die Elektronikeinrichtung 15 zumindest dazu ausgelegt, unter Berücksichtigung der Bremsvorgabe 16, der mindestens einen ersten Information 22 und der mindestens einen zweiten Information 24 wahlweise zu entscheiden, ob die jeweilige Bremsdrucksteigerung zu 100% mittels (des Betriebs) der mindestens einen Hydraulikeinrichtung 10 und zu 0% mittels (des Betriebs) des Bremskraftverstärkers 12 oder zu 0% mittels (des Betriebs) der mindestens einen Hydraulikeinrichtung 10 und zu 100% mittels (des Betriebs) des Bremskraftverstärkers 12 zu erfüllen ist. Gegebenenfalls wird die jeweilige Bremsdrucksteigerung entweder ausschließlich mittels des Betriebs der mindestens einen Hydraulikeinrichtung 10 oder ausschließlich mittels des Betriebs des Bremskraftverstärkers 12 erfüllt. Speziell bei einem Ausfall der mindestens einen Hydraulikeinrichtung 10 kann auf diese Weise auf den Bremskraftverstärker 12 zurückgegriffen werden. Entsprechend kann auch bei einem Ausfall des Bremskraftverstärkers 12 dieser durch den Betrieb der mindestens einen Hydraulikeinrichtung 10 ersetzt werden.

Die Elektronikeinrichtung 15 kann jedoch auch dazu ausgelegt, unter Berücksichtigung der Bremsvorgabe 16, der mindestens einen ersten Information 22 und der mindestens einen zweiten Information 24 zu entscheiden, dass die jeweilige Bremsdrucksteigerung zu x% mittels (des Betriebs) der mindestens einen Hydraulikeinrichtung 10 und zu (100-x)% mittels (des Betriebs) des Bremskraftverstärkers 12 zu erfüllen ist, wobei für x mindestens ein Wert zwischen 0 und 100 stehen kann. Auf eine abnehmende Einsetzbarkeit der mindestens einen Hydraulikeinrichtung 10 kann deshalb auch mit einem zusätzlichen/verstärkten Betrieb des Bremskraftverstärkers 12 reagiert werden. Ebenso kann bei einer abnehmenden Einsetzbarkeit des Bremskraftverstärkers 12 zusätzlich/verstärkt die mindestens eine Hydraulikeinrichtung 10 benutzt werden. Damit besteht eine hohe Flexibilität zum Reagieren auf Situationen, in denen die mindestens eine Hydraulikeinrichtung 10 oder der Bremskraftverstärker 12 nur noch limitiert einsetzbar sind.

Der mindestens eine elektrische Motor 20 kann z.B. mindestens ein Antriebsmotor des Fahrzeugs, mindestens ein Startergenerator und/oder mindestens ein eine Längskraft zur Verfügung stellendes Element im Antriebsstrang (E-Maschine) sein. Unter dem mindestens einen elektrischen Motor 20 können alle Elemente, welche eine Längsfähigkeit des Fahrzeugs beeinflussen, verstanden werden.

In einer vorteilhaften Weiterbildung kann auch der mindestens eine elektrische Motor 20 mittels mindestens eines dritten Steuersignals 30 durch die Elektronikeinrichtung 15 ansteuerbar sein. Insbesondere kann in diesem Fall die Elektronikeinrichtung 15 dazu ausgelegt sein, unter Berücksichtigung der Bremsvorgabe 16 und zumindest mindestens einer dritten Information 32 bezüglich einer aktuellen Einsatzfähigkeit des mindestens einen elektrischen Motors 20 zu entscheiden, welches mindestens eine Generator-Bremsmoment mittels des mindestens einen elektrischen Motors 20 zu bewirken ist, und den mindestens einen elektrischen Motor 20 mittels des mindestens einen dritten Steuersignals 30 entsprechend anzusteuern. Auch die mindestens eine erste Information 22 und/oder die mindestens eine zweite Information 24 können dabei mitberücksichtigbar sein. Die Elektronikeinrichtung 15 kann danach entscheiden, welche Bremsdrucksteigerung in dem mindestens einen Radbremszylinder unter Berücksichtigung der Bremsvorgabe 16, der mindestens einen dritten Information 32 und/oder des mindestens einen Generator-Bremsmoment gewünscht ist, und anschließend die Entscheidung bezüglich des ersten Soll-Anteils der jeweiligen Bremsdrucksteigerung und des zweiten Soll-Anteils der jeweiligen Bremsdrucksteigerung treffen.

Die Elektronikeinrichtung 15 kann insbesondere dazu ausgelegt sein, zumindest unter Berücksichtigung eines (nicht skizzierten) ersten Signals bezüglich einer Bereitstellung mindestens eines ersten Versorgungsstroms an die mindestens eine Hydraulikeinrichtung 10 als die mindestens eine erste Information 22 und/oder eines (nicht dargestellten) zweiten Signals bezüglich einer Bereitstellung eines zweiten Versorgungsstroms an den Bremskraftverstärker 12 als die mindestens eine zweite Information 24 zu entscheiden, zu welchem ersten Soll-Anteil die jeweilige Bremsdrucksteigerung mittels der mindestens einen Hydraulikeinrichtung 10 und zu welchem zweiten Soll-Anteil die jeweilige Bremsdrucksteigerung mittels des Bremskraftverstärkers 12 zu erfüllen ist. Damit kann die Elektronikeinrichtung 15 schnell auf eine unzureichende/entfallende Stromversorgung der mindestens einen Hydraulikeinrichtung 10 oder des Bremskraftverstärkers 12 reagieren und dafür sorgen, dass die gewünschte (die Bremsvorgabe 16 erfüllende) Bremsdrucksteigerung in dem mindestens einen Radbremszylinder trotzdem bewirkbar bleibt. Auf eine besonders vorteilhafte Auslegung der Elektronikeinrichtung 15/des Bremssystem zur Erfüllung dieses Vorteils wird unten noch eingegangen. Als die mindestens eine erste Information 22 kann jedoch auch ein Status der mindestens einen Hydraulikeinrichtung 10 weitergeleitet werden. Entsprechend kann ein Status des Bremskraftverstärkers 12 als die mindestens eine zweite Information 24 weitergeleitet werden.

Die mindestens eine Hydraulikeinrichtung 10 kann beispielsweise in ein ESP-System 34 des Bremssystems integriert sein. Dies ist insbesondere vorteilhaft, wenn die mindestens eine Hydraulikeinrichtung 10 mindestens eine Pumpe ist. Die mindestens eine erste Information 22 kann damit auch einen Status des ESP-Systems 34 umfassen. Bei einem Ausfall des Bremskraftverstärkers 12 können in diesem Fall alle seine Funktionen mittels des ESP-Systems 34 abgedeckt werden. Entsprechend können bei einem Ausfall des ESP-Systems 34 dessen Funktionalitäten zumindest teilweise von dem Bremskraftverstärker 12 übernommen werden.

In der Ausführungsform der Fig. 1 ist die mindestens eine Hydraulikeinrichtung 10/das ESP-System 34 an einem in dem Bremssystem ausgebildeten ersten Stromversorgungsnetz oder Stromversorgungsnetzteil 36 angebunden. Unter dem ersten Stromversorgungsnetz oder Stromversorgungsnetzteil 36 ist eine elektronische Einrichtung zu verstehen, über welches die mindestens eine Hydraulikeinrichtung 10/das ESP-System 34 an einer ersten Energiequelle 38 des Fahrzeugs anbindbar oder angebunden ist. Mittels der ersten Energiequelle 38 des Fahrzeugs ist zumindest der mindestens eine erste Versorgungsstrom (über das erste Stromversorgungsnetz oder Stromversorgungsnetzteil 36) an die mindestens eine Hydraulikeinrichtung 10/das ESP-System 34 bereitstellbar. Demgegenüber ist der Bremskraftverstärker 12 an einem in dem Bremssystem ausgebildeten zweiten Stromversorgungsnetz oder Stromversorgungsnetzteil 40 angebunden. Auch unter dem zweiten Stromversorgungsnetz oder Stromversorgungsnetzteil 40 ist eine elektronische Einrichtung zu verstehen, über welches der Bremskraftverstärker 40 an einer zweiten Energiequelle 42 des Fahrzeugs anbindbar oder angebunden ist. Deshalb ist der zweite Versorgungsstrom des Bremskraftverstärkers 12 (über das zweite Stromversorgungsnetz oder Stromversorgungsnetzteil 40) von der zweiten Energiequelle 42 des Fahrzeugs an den Bremskraftverstärker 12 bereitstellbar. Die erste Energiequelle 38 und/oder die zweite Energiequelle 42 können z.B. (je) eine Batterie und/oder ein Fahrzeugbordnetz sein. Das erste Signal und/oder das zweite Signal können somit ein Benachrichtigungsignal, dass die erste Energiequelle 38/ zweite Energiequelle 42 ausgefallen ist, sein. Derartige Signale lassen sich leicht mittels einer einfach ausgeführten Elektronikeinrichtung 15 auswerten.

Als vorteilhafte Weiterbildung kann eine automatische Parkbremse 44 ebenfalls an dem ersten Stromversorgungsnetz oder Stromversorgungsnetzteil 36 angebunden sein. Außerdem kann eine Parkklinke 46 ebenfalls an dem zweiten Stromversorgungsnetz oder Stromversorgungsnetzteil 40 angebunden sein. Damit bleibt trotz einer aufgrund eines Ausfalls der ersten Energiequelle 38 entfallenden Einsetzbarkeit der automatischen Parkbremse 44 die Parkklinke 46 noch nutzbar. Entsprechend ist trotz einer aufgrund eines Ausfalls der zweiten Energiequelle 42 entfallenden Einsetzbarkeit der Parkklinke 46 noch eine Funktionsfähigkeit der automatischen Parkbremse 44 sichergestellt.

Bevorzugter Weise ist, insbesondere bei einer Anbindung der automatischen Parkbremse 44 an dem ersten Stromversorgungsnetz oder Stromversorgungsnetzteil 36 und einer Anbindung der Parkklinke 46 an dem zweiten Stromversorgungsnetz oder Stromversorgungsnetzteil 40, die Elektronikeinrichtung 15 dazu ausgelegt, (unter Berücksichtigung der Informationen 22 und 24) zu entscheiden, ob ein Stillstand des Fahrzeugs mittels der automatischen Parkbremse 44 oder durch Verriegeln eines (nicht dargestellten) Getriebes des Fahrzeugs mittels der Parkklinke 46 zu sichern ist. Anschließend kann die Elektronikeinrichtung 15 die automatische Parkbremse 44 oder die Parkklinge 46 (mittels mindestens eines nicht-skizzierten Steuersignals) entsprechend anzusteuern. Beim wahlweisen Nutzen der automatischen Parkbremse 44 oder der Parkklinke 46 zum Absichern eines Stillstands des Fahrzeugs können auch die Informationen 22 und 24 für die Entscheidung berücksichtigt werden. Insbesondere das mindestens eine ein Benachrichtigungsignal, dass die erste Energiequelle 38/ zweite Energiequelle 42 ausgefallen ist, ist damit vielseitig nutzbar.

Es wird allerdings darauf hingewiesen, dass die in dem vorausgehenden Absatz beschriebene Auslegung der Elektronikeinrichtung 15 auch ohne die Anbindung der automatischen Parkbremse 44 an dem ersten Stromversorgungsnetz oder Stromversorgungsnetzteil 36 und die Anbindung der Parkklinke 46 an dem zweiten Stromversorgungsnetz oder Stromversorgungsnetzteil 40 vorteilhaft ist. Ebenso wird darauf hingewiesen, dass mittels der Elektronikeinrichtung 15 auch andere Informationen bezüglich einer Einsatzfähigkeit der automatischen Parkbremse 44 und/oder einer Einsatzfähigkeit der Parkklinke 46 auswertbar sein können.

Es wird daran erinnert, dass der Bremskraftverstärker 12 besser als die automatische Parkbremse 44 zum Kompensieren einer entfallenden Einsetzbarkeit der mindestens einen Hydraulikeinrichtung 10/des ESP-Systems 34 am fahrenden Fahrzeug ausgelegt ist. Insbesondere sind auch hohe Verzögerungen des Fahrzeugs mittels des Bremskraftverstärkers 12 realisierbar, ohne dass ein Nickverhalten auftritt.

In der Ausführungsform der Fig. 1 ist die Steuervorrichtung 14/Elektronikeinrichtung 15 als eine kompakte Einheit dargestellt. In einer alternativen Ausführungsform kann jedoch auch eine erste Untereinheit der Steuervorrichtung 14/Elektronikeinrichtung 15 in eine ESP-Steuereinrichtung des ESP-Systems 34 integriert sein. Außerdem kann eine zweite Untereinheit der Steuervorrichtung 14/Elektronikeinrichtung 15 in eine Bremskraftverstärker-Steuereinrichtung des Bremskraftverstärkers 12 integriert sein. Auch kann ein Notfall-Stillstandsmanagement im Bremskraftverstärker 12 hinterlegt sein, welches im Bedarfsfall eine Getriebeverriegelung mittels der Parkklinke 46 aktiv antriggert.

Sofern gewünscht, kann noch eine dritte Untereinheit der Steuervorrichtung 14/Elektronikeinrichtung 15 in eine Motor-Steuereinrichtung des mindestens einen elektrischen Motors 20/Antriebmotors integriert sein. Auf eine Ausstattung der Steuervorrichtung 14 mit einem eigenen Gehäuse kann somit auch leicht verzichtet werden. Die mindestens eine Hydraulikeinrichtung 10/das ESP-System 34 und der Bremskraftverstärker 12 können auch dazu ausgelegt sein, untereinander Kommunikationssignale 48 auszutauschen. Auch der mindestens eine elektrische Motor 20/Antriebmotor kann dazu ausgelegt sein, mit der mindestens einen Hydraulikeinrichtung 10/dem ESP-System 34 und/oder dem Bremskraftverstärker 12 Kommunikationssignale 48 auszutauschen. Außerdem kann mindestens eine Drehzahl mindestens eines an dem mindestens einen Radbremszylinder angeordneten Rads sowohl an die mindestens eine Hydraulikeinrichtung 10/das ESP-System 34 als auch an den Bremskraftverstärker 12 ausgegeben werden. Die mindestens eine Drehzahl ist z.B. für einen Stabilitätsalgorithmus nutzbar. Außerdem ist in diesem Fall selbst in der Rückfallebene eine Funktion der mindestens einen Hydraulikeinrichtung 10/des ESP-Systems 34 und/oder des Bremskraftverstärkers 12 bezüglich der mindestens einen Drehzahl optimierbar.

Das Bremssystem der Fig. 1 kann trotz eines Ausfalls der mindestens einen Hydraulikeinrichtung 10 oder des Bremskraftverstärkers 12 noch eine Verzögerung von zumindest 0,64 g gewährleisten. Z.B. kann nach einem Ausfall der mindestens einen Hydraulikeinrichtung 10/des ESP-Systems 34 der Bremskraftverstärker 12 wahlweise einen festen Verzögerungswert (von z.B. 5 m/s²), eine modulierte/variierte Verzögerung (ein "Stotterbremsen" zum Verhindern einer Blockierung der Räder), eine an mindestens eine Getriebeausgangsdrehzahl/ gemittelte Achsdrehzahl angepasste Verzögerung oder eine an das Signal mindestens eines Drehzahlsensors angepasste Verzögerung bewirken. Die hier beschriebenen Strategien sind auch für ein Verzögern/Anhalten auf einer Fahrbahn mit Hochreibwerten tauglich. Eine Stabilisierung des Fahrzeugs ist unter derartigen Bedingungen häufig nicht notwendig. Außerdem ist auch in einer Rückfallebene des Bremssystems eine Kombination aus Bremsen/Anhalten, Parken/Sichern und Stabilisieren geschaffen.

Das Bremssystem der Fig. 1 erfüllt aufgrund seiner vorteilhaften Kompensationsfähigkeit (zum Kompensieren eines Ausfalls der mindestens einen Hydraulikeinrichtung 10 oder des Bremskraftverstärkers 12) eine Kernanforderung für ein automatisches/hochautomatisches Fahren des damit ausgestatteten Fahrzeugs. Aufgrund der sichergestellten Verzögerungsfähigkeit des Bremssystems trotz des Ausfalls der mindestens einen Hydraulikeinrichtung 10 oder des Bremskraftverstärkers 12 kann das Bremssystem auch für ein "fahrerfreies Fahren" genutzt werden. Eine bei einem "fahrerfreien Fahren" häufig nur geringe Aufmerksamkeit des Fahrers ist aufgrund der selbst beim Ausfall der mindestens einen Hydraulikeinrichtung 10 oder des Bremskraftverstärkers 12 noch weiterhin gewährleisteten Verzögerungsfähigkeit des Bremssystems nicht nachteilig.

Das Bremssystem kann deshalb auch vorteilhaft mit der Steuerautomatik 18, welche das automatische Fahren des damit ausgestatteten Fahrzeugs steuert, zusammenwirken. Beispielsweise kann die Steuerautomatik 18 in diesem Fall dazu ausgelegt sein, unter Berücksichtigung mindestens eines Sensorsignals mindestens eines (nicht skizzierten) Umgebungserfassungssensors des Fahrzeugs eine Soll-Trajektorie des Fahrzeugs festzulegen. Anhand der festgelegten Soll-Trajektorie und einer aktuellen Geschwindigkeit des Fahrzeugs kann die Steuerautomatik 18 anschließend die Bremsvorgabe 16 festlegen und an die Steuervorrichtung 14 ausgeben. (Die Bremsvorgabe 16 kann z.B. eine Soll-Verzögerung des Fahrzeugs sein.)

In einer vorteilhaften Weiterbildung der Steuerautomatik 18 kann diese außerdem dazu ausgelegt sein, von der Steuervorrichtung 14 eine Information 50, welche z.B. die mindestens eine erste Information 22, die mindestens eine zweite Information 24 und/oder die mindestens eine dritte Information 32 (bzw. mindestens eine von mindestens einer Information 22, 24 und 32 abgeleitete Information) umfasst, zu empfangen und bei der Festlegung der Soll-Trajektorie des Fahrzeugs mit zu berücksichtigen. Beispielsweise kann in diesem Fall die Soll-Trajektorie an eine aktuelle Funktionsbeeinträchtigung der mindestens einen Hydraulikeinrichtung 10 oder des Bremskraftverstärkers 12 angepasst werden. Beispielsweise kann bei der durch die Steuerautomatik 18 ausgeführten Trajektorienplanung eine niedrigere Druckaufbaudynamik der mindestens einen den Bremskraftverstärker 12 kompensierenden Hydraulikeinrichtung 10 mitberücksichtigt werden. Ebenso kann zur Festlegung der Soll-Trajektorie von der Steuerautomatik 18 in Betracht gezogen werden, dass manche Bremskraftverstärkertypen nicht alle Funktionen der mindestens einen Hydraulikeinrichtung 10/des ESP-Systems 34 abdecken. Auch eventuell vorliegende verringerte Bremssystemfunktionalitäten des Bremskraftverstärkers 12 können somit bei der von der Steuerautomatik 18 ausgeführten Trajektorienplanung mitberücksichtigbar sein.

Als andere vorteilhafte Weiterbildung kann die Steuervorrichtung 14/Elektronikeinrichtung 15 auch zum Ansteuern einer Beschleunigung des Fahrzeugs mittels des mindestens einen elektrischen Motors 20/Antriebsmotors ausgelegt sein. Dabei kann die Elektronikeinrichtung 15 auch die mindestens eine dritte Information 32 mitberücksichtigen.

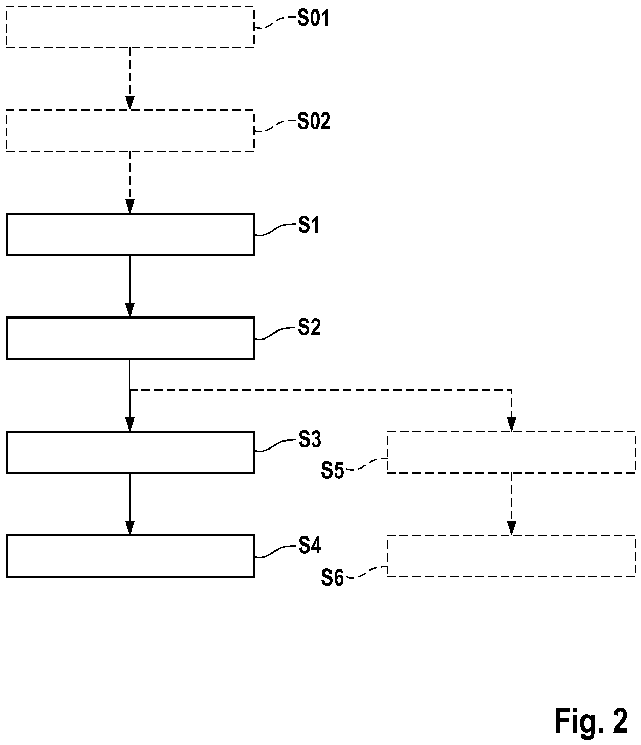

Fig. 2 zeigt ein Flussdiagramm zum Erläutern einer Ausführungsform des Verfahrens zum Betreiben eines Bremssystems eines Fahrzeugs.

Das im Weiteren beschriebene Verfahren zum Betreiben eines Bremssystems eines Fahrzeugs ist beispielsweise mittels des zuvor ausgeführten Bremssystems ausführbar. Es wird jedoch darauf hingewiesen, dass eine Ausführbarkeit des Verfahrens nicht auf einen bestimmten Bremssystemtyp limitiert ist.

Es wird nochmal daran erinnert, dass das Verfahren nicht nur ein Ansteuern mindestens einer Hydraulikeinrichtung des Bremssystems zumindest unter Berücksichtigung einer Bremsvorgabe eines Fahrers des Fahrzeugs oder einer Steuerautomatik des Fahrzeugs umfasst. Das Verfahren dient damit nicht nur einem Bewirken mindestens einer Bremsdrucksteigerung in mindestens einem Radbremszylinder des Bremssystems entsprechend der Bremsvorgabe zumindest mittels der mindestens einen Hydraulikeinrichtung.

In einem Verfahrensschritt S1 des Verfahrens wird mindestens eine erste Information bezüglich einer aktuellen Einsatzfähigkeit der mindestens einen Hydraulikeinrichtung ermittelt. Entsprechend wird in einem zuvor, danach oder gleichzeitig ausgeführten Verfahrensschritt S2 mindestens eine zweite Information bezüglich einer aktuellen Einsatzfähigkeit eines Bremskraftverstärkers des Bremssystems ermittelt. Beispielsweise wird in dem Verfahrensschritt S1 als die mindestens eine erste Information zumindest ermittelt, ob mindestens ein erster Versorgungsstrom an die mindestens eine Hydraulikeinrichtung bereitgestellt wird, bzw. ob eine erste Energiequelle des Fahrzeugs, welche über ein erstes Stromversorgungsnetz mit der mindestens einen Hydraulikeinrichtung verbunden ist, ausgefallen ist. Ebenso kann in dem Verfahrensschritt S2 als die mindestens eine zweite Information zumindest ermittelt werden, ob ein zweiter Versorgungsstrom an den Bremskraftverstärker bereitstellt wird, bzw. ob eine zweite Energiequelle des Fahrzeugs, welche über ein zweites Stromversorgungsnetz mit dem Bremskraftverstärker verbunden ist, ausgefallen ist. Als die mindestens eine erste Information 22 kann jedoch auch ein Status der mindestens einen Hydraulikeinrichtung 10 in dem Verfahrensschritt S1 ermittelt werden. Als Alternative oder Ergänzung kann ein Status des Bremskraftverstärkers 12 als die mindestens eine zweite Information 24 in dem Verfahrensschritt S2 ermittelt werden.

In einem Verfahrensschritt S3 wird unter Berücksichtigung der Bremsvorgabe und unter zusätzlicher Berücksichtigung der mindestens einen ersten Information und der mindestens einen zweiten Information entschieden, zu welchem ersten Soll-Anteil die jeweilige Bremsdrucksteigerung mittels der mindestens einen Hydraulikeinrichtung und zu welchem zweiten Soll-Anteil die jeweilige Bremsdrucksteigerung mittels des Bremskraftverstärkers auszuführen ist. Danach werden der mindestens einen Hydraulikeinrichtung und/oder des Bremskraftverstärkers in einem Verfahrensschritt S4 derart angesteuert, dass die jeweilige Bremsdrucksteigerung zu dem ersten Soll-Anteil mittels der mindestens einen Hydraulikeinrichtung und zu dem zweiten Soll-Anteil mittels des Bremskraftverstärkers ausgeführt wird.

In einem optionalen Verfahrensschritt S5 kann (unter Berücksichtigung der mindestens einen ersten Information und der mindestens einen zweiten Information) zusätzlich entschieden werden, ob ein Stillstand des Fahrzeugs mittels einer automatischen Parkbremse oder durch Verriegeln eines Getriebes des Fahrzeugs mittels einer Parkklinke gesichert wird. In einem weiteren Verfahrensschritt S6 kann die automatische Parkbremse oder die Parkklinke entsprechend angesteuert werden.

Das hier beschriebene Verfahren ist außerdem zu einem Verfahren zum automatisierten Fahren eines Fahrzeugs weiterbildbar: Dazu wird in einem Verfahrensschritt S01 eine Soll-Trajektorie des fahrenden Fahrzeugs unter Berücksichtigung mindestens eines Sensorsignals mindestens eines Umgebungserfassungssensors des Fahrzeugs festgelegt. In einem weiteren Verfahrensschritt S02 erfolgt ein Festlegen einer Bremsvorgabe an das Bremssystem des Fahrzeugs unter Berücksichtigung der festgelegten Soll-Trajektorie und einer aktuellen Geschwindigkeit des Fahrzeugs. Zum Ausführen der Bremsvorgabe können danach zumindest die Verfahrensschritte S1 bis S4 ausgeführt werden.

## Patentansprüche

1. Bremssystem für ein Fahrzeug mit:
mindestens einem Radbremszylinder;
mindestens einer Hydraulikeinrichtung (10); und
einer Steuervorrichtung (14) für zumindest das Bremssystem mit einer Elektronikeinrichtung (15), welche dazu ausgelegt ist, die mindestens eine Hydraulikeinrichtung (10) des Bremssystems zumindest unter Berücksichtigung einer Bremsvorgabe (16) eines Fahrers des Fahrzeugs oder einer Steuerautomatik (18) des Fahrzeugs anzusteuern, so dass mindestens eine Bremsdrucksteigerung in dem mindestens einen Radbremszylinder des Bremssystems entsprechend der Bremsvorgabe (16) zumindest mittels der mindestens einen Hydraulikeinrichtung (10) bewirkbar ist;
**gekennzeichnet durch**
einen Bremskraftverstärker (12);
wobei die Elektronikeinrichtung (15) dazu ausgelegt ist, unter Berücksichtigung der Bremsvorgabe (16) und unter zusätzlicher Berücksichtigung mindestens einer ersten Information (22) bezüglich einer aktuellen Einsatzfähigkeit der mindestens einen Hydraulikeinrichtung (10) und mindestens einer zweiten Information (24) bezüglich einer aktuellen Einsatzfähigkeit eines Bremskraftverstärkers (12) des Bremssystems zu entscheiden, zu welchem ersten Soll-Anteil die jeweilige Bremsdrucksteigerung mittels der mindestens einen Hydraulikeinrichtung (10) und zu welchem zweiten Soll-Anteil die jeweilige Bremsdrucksteigerung mittels des Bremskraftverstärkers (12) zu erfüllen ist, und die mindestens eine Hydraulikeinrichtung (10) und/oder den Bremskraftverstärker (10) derart anzusteuern, dass die jeweilige Bremsdrucksteigerung zu dem ersten Soll-Anteil mittels der mindestens einen Hydraulikeinrichtung (10) und zu dem zweiten Soll-Anteil mittels des Bremskraftverstärkers (12) erfüllbar ist.

2. Bremssystem nach Anspruch 1, wobei die Elektronikeinrichtung (15) zumindest dazu ausgelegt ist, unter Berücksichtigung der Bremsvorgabe (16), der mindestens einen ersten Information (22) und der mindestens einer zweiten Information (24) wahlweise zu entscheiden, ob die jeweilige Bremsdrucksteigerung zu 100% mittels der mindestens einen Hydraulikeinrichtung (10) und zu 0% mittels des Bremskraftverstärkers (12) oder zu 0% mittels der mindestens einen Hydraulikeinrichtung (10) und zu 100% mittels des Bremskraftverstärkers (12) zu erfüllen ist.

3. Bremssystem nach Anspruch 1 oder 2, wobei die Elektronikeinrichtung (15) dazu ausgelegt ist, zumindest unter Berücksichtigung eines ersten Signals bezüglich einer Bereitstellung mindestens eines ersten Versorgungsstroms an die mindestens eine Hydraulikeinrichtung (10) als die mindestens eine erste Information (22) und/oder eines zweiten Signals bezüglich einer Bereitstellung eines zweiten Versorgungsstroms an den Bremskraftverstärker (12) als die mindestens eine zweite Information (24) zu entscheiden, zu welchem ersten Soll-Anteil die jeweilige Bremsdrucksteigerung mittels der mindestens einen Hydraulikeinrichtung (10)und zu welchem zweiten Soll-Anteil die jeweilige Bremsdrucksteigerung mittels des Bremskraftverstärkers (12) zu erfüllen ist.

4. Bremssystem nach einem der vorhergehenden Ansprüche, wobei die mindestens eine Hydraulikeinrichtung (10) in ein ESP-System (34) des Bremssystems integriert ist, und wobei eine erste Untereinheit der Steuervorrichtung (14) in eine ESP-Steuereinrichtung des ESP-Systems (34) integriert ist und eine zweite Untereinheit der Steuervorrichtung (14) in eine Bremskraftverstärker-Steuereinrichtung des Bremskraftverstärkers (12) integriert ist.

5. Bremssystem nach einem der vorhergehenden Ansprüche, wobei die mindestens eine Hydraulikeinrichtung (10) an einem in dem Bremssystem ausgebildeten ersten Stromversorgungsnetz oder Stromversorgungsnetzteil (36) angebunden ist, über welches die mindestens eine Hydraulikeinrichtung (10) an einer ersten Energiequelle (38) des Fahrzeugs anbindbar oder angebunden ist, und der Bremskraftverstärker (12) an einem in dem Bremssystem ausgebildeten zweiten Stromversorgungsnetz oder Stromversorgungsnetzteil (40) angebunden ist, über welches der Bremskraftverstärker (12) an einer zweiten Energiequelle (42) des Fahrzeugs anbindbar oder angebunden ist.

6. Bremssystem nach Anspruch 5, wobei die Elektronikeinrichtung (15) zusätzlich dazu ausgelegt ist, zu entscheiden, ob ein Stillstand des Fahrzeugs mittels einer automatischen Parkbremse (44) oder durch Verriegeln eines Getriebes des Fahrzeugs mittels einer Parkklinke (46) zu sichern ist, und die automatische Parkbremse (44) oder die Parkklinge (46) entsprechend anzusteuern, und wobei die automatische Parkbremse (44) ebenfalls an dem ersten Stromversorgungsnetz oder Stromversorgungsnetzteil (36) angebunden ist, und die Parkklinke (46) ebenfalls an dem zweiten Stromversorgungsnetz oder Stromversorgungsnetzteil (40) angebunden ist.

7. Fahrzeug, welches zum automatisierten Fahren ausgelegt ist, mit:
einem Bremssystem nach einem der vorhergehenden Ansprüche; und
der Steuerautomatik (18), welche dazu ausgelegt ist, unter Berücksichtigung mindestens eines Sensorsignals mindestens eines Umgebungserfassungssensors des Fahrzeugs eine Soll-Trajektorie des Fahrzeugs festzulegen, und anhand der festgelegten Soll-Trajektorie und einer aktuellen Geschwindigkeit des Fahrzeugs die Bremsvorgabe (16) festzulegen und an die Steuervorrichtung (14) auszugeben.

8. Verfahren zum Betreiben eines Bremssystems eines Fahrzeugs mit dem Schritt:
Ansteuern mindestens einer Hydraulikeinrichtung (10) des Bremssystems zumindest unter Berücksichtigung einer Bremsvorgabe (16) eines Fahrers des Fahrzeugs oder einer Steuerautomatik (18) des Fahrzeugs, so dass mindestens eine Bremsdrucksteigerung in mindestens einem Radbremszylinder des Bremssystems entsprechend der Bremsvorgabe (16) zumindest mittels der mindestens einen Hydraulikeinrichtung (10) bewirkt wird;
**gekennzeichnet durch** die Schritte:
Ermitteln mindestens einer ersten Information (22) bezüglich einer aktuellen Einsatzfähigkeit der mindestens einen Hydraulikeinrichtung (10) (S1);
Ermitteln mindestens einer zweiten Information (24) bezüglich einer aktuellen Einsatzfähigkeit eines Bremskraftverstärkers (12) des Bremssystems (S2);
Entscheiden unter Berücksichtigung der Bremsvorgabe (16) und unter zusätzlicher Berücksichtigung der mindestens einen ersten Information (22) und der mindestens einen zweiten Information (24), zu welchem ersten Soll-Anteil die jeweilige Bremsdrucksteigerung mittels der mindestens einen Hydraulikeinrichtung (10) und zu welchem zweiten Soll-Anteil die jeweilige Bremsdrucksteigerung mittels des Bremskraftverstärkers (12) auszuführen ist (S3); und
Ansteuern der mindestens einen Hydraulikeinrichtung (10) und/oder des Bremskraftverstärkers (12) derart, dass die jeweilige Bremsdrucksteigerung zu dem ersten Soll-Anteil mittels der mindestens einen Hydraulikeinrichtung (10) und zu dem zweiten Soll-Anteil mittels des Bremskraftverstärkers (12) ausgeführt wird (S4).

9. Verfahren nach Anspruch 8, wobei als die mindestens eine erste Information (22) zumindest ermittelt wird, ob mindestens ein erster Versorgungsstrom an die mindestens eine Hydraulikeinrichtung (10) bereitgestellt wird, und/oder als die mindestens eine zweite Information (24) zumindest ermittelt wird, ob ein zweiter Versorgungsstrom an den Bremskraftverstärker (12) bereitstellt wird.

10. Verfahren nach Anspruch 8 oder 9, wobei als die mindestens eine erste Information (22) zumindest ermittelt wird, ob eine erste Energiequelle (38) des Fahrzeugs, welche über ein erstes Stromversorgungsnetz (36) mit der mindestens einen Hydraulikeinrichtung (10) verbunden ist, ausgefallen ist, und/oder als die mindestens eine zweite Information (24) zumindest ermittelt wird, ob eine zweite Energiequelle (42) des Fahrzeugs, welche über ein zweites Stromversorgungsnetz (40) mit dem Bremskraftverstärker (12) verbunden ist, ausgefallen ist.

11. Verfahren nach einem der Ansprüche 8 bis 10, wobei zusätzlich entschieden wird, ob ein Stillstand des Fahrzeugs mittels einer automatischen Parkbremse (44) oder durch Verriegeln eines Getriebes des Fahrzeugs mittels einer Parkklinke (46) gesichert wird (S5).

12. Verfahren zum automatisierten Fahren eines Fahrzeugs mit den Schritten:
Festlegen einer Soll-Trajektorie des fahrenden Fahrzeugs unter Berücksichtigung mindestens eines Sensorsignals mindestens eines Umgebungserfassungssensors des Fahrzeugs (S01);
Festlegen einer Bremsvorgabe (16) an das Bremssystem des Fahrzeugs unter Berücksichtigung der festgelegten Soll-Trajektorie und einer aktuellen Geschwindigkeit des Fahrzeugs (S02); und
Ausführen der Bremsvorgabe (16) durch Betreiben des Bremssystems gemäß einem der Ansprüche 8 bis 11.

## Claims

1. Brake system for a vehicle, having:
at least one wheel brake cylinder;
at least one hydraulic apparatus (10); and
a control device (14) for at least the brake system having an electronic apparatus (15) which is configured to actuate the at least one hydraulic apparatus (10) of the brake system at least taking into account a braking specification (16) of a driver of the vehicle or an automatic control system (18) of the vehicle, so that at least one increase in brake pressure in the at least one wheel brake cylinder of the brake system can be brought about in accordance with the braking specification (16) at least by means of the at least one hydraulic apparatus (10);
**characterized by**
a brake booster (12);
wherein the electronic apparatus (15) is configured to decide, taking into account the braking specification (16) and additionally taking into account at least one first information item (22) relating to a current capability of deployment of the at least one hydraulic apparatus (10) and at least one second information item (24) relating to a current capability of deployment of a brake booster (12) of the brake system, what first setpoint proportion of the respective increase in brake pressure is to be provided by means of the at least one hydraulic apparatus (10) and what second setpoint proportion of the respective increase in brake pressure is to be provided by means of the brake booster (12), and to actuate the at least one hydraulic apparatus (10) and/or the brake booster (10) in such a way that the first setpoint proportion of the respective increase in brake pressure can be provided by means of the at least one hydraulic apparatus (10) and the second setpoint proportion of the respective increase in brake pressure can be provided by means of the brake booster (12).

2. Brake system according to Claim 1, wherein the electronic apparatus (15) is at least configured optionally to decide, taking into account the braking specification (16), the at least one first information item (22) and the at least one second information item (24), whether 100% of the respective increase in brake pressure is to be provided by means of the at least one hydraulic apparatus (10) and whether 0% of the respective increase in brake pressure is to be provided by means of the brake booster (12) or 0% of the respective increase in brake pressure is to be provided by means of the at least one hydraulic apparatus (10) and 100% of the respective increase in brake pressure is to be provided by means of the brake booster (12).

3. Brake system according to Claim 1 or 2, wherein the electronic apparatus (15) is configured to decide, at least taking into account a first signal relating to a provision of at least a first supply current to the at least one hydraulic apparatus (10) as the at least one first information item (22) and/or a second signal relating to a provision of a second supply current to the brake booster (12) as the at least one second information item (24), what first setpoint proportion of the respective increase in brake pressure is to be provided by means of the at least one hydraulic apparatus (10) and what second setpoint portion of the respective increase in brake pressure is to be provided by means of the brake booster (12).

4. Brake system according to one of the preceding claims, wherein the at least one hydraulic device (10) is integrated into an ESP system (34) of the brake system, and wherein a first subunit of the control device (14) is integrated into an ESP control apparatus of the ESP system (34), and a second subunit of the control device (14) is integrated into a brake booster controller apparatus of the brake booster (12).

5. Brake system according to one of the preceding claims, wherein the at least one hydraulic apparatus (10) is connected to a first power supply grid or power supply unit (36) which is formed in the brake system and by means of which the at least one hydraulic apparatus (10) can be or is connected to a first energy source (38) of the vehicle, and the brake booster (12) is connected to a second power supply grid or power supply unit (40) which is formed in the brake system and by means of which the brake booster (12) can be or is connected to a second energy source (42) of the vehicle.

6. Brake system according to Claim 5, wherein the electronic apparatus (15) is additionally configured to decide whether a stationary state of the vehicle is to be secured by means of an automatic parking brake (44) or by locking a transmission of the vehicle by means of a parking pawl (46), and the automatic parking brake (44) or the parking pawl (46) is to be correspondingly actuated, and wherein the automatic parking brake (44) is also connected to the first power supply grid or power supply unit (36), and the parking pawl (46) is also connected to the second power supply grid or power supply unit (40).

7. Vehicle which is configured for automatic driving, having:
a brake system according to one of the preceding claims; and
the automatic control system (18) which is configured to define a setpoint trajectory of the vehicle taking into account at least one sensor signal of at least one surroundings sensing sensor of the vehicle, and to define the braking specification (16) on the basis of the defined setpoint trajectory and a current speed of the vehicle and to output it to the control device (14) .

8. Method for operating a brake system of a vehicle having the step:
actuating at least one hydraulic apparatus (10) of the brake system at least taking into account a braking specification (16) of a driver of the vehicle or an automatic control system (18) of the vehicle, so that at least one increase in brake pressure in at least on wheel brake cylinder of the brake system is brought about in accordance with the braking specification (16) at least by means of the at least one hydraulic apparatus (10) ;
**characterized by** the steps;
determining at least one first information item (22) relating to a current capability of deployment of the at least one hydraulic apparatus (10) (S1);
determining at lest one second information item (24) relating to a current capability of deployment of a brake booster (12) of the brake system (S2);
deciding, taking into account the braking specification (16) and additionally taking into account the at least one first information item (22) and the at least one second information item (24), what first setpoint proportion of the respective increase in brake pressure is to be implemented by means of the at least one hydraulic apparatus (10) and what second setpoint proportion of the respective increase in brake pressure is to be implemented by means of the brake booster (12) (S3); and
actuating the at least one hydraulic apparatus (10) and/or the brake booster (12) in such a way that the respective first setpoint proportion of the respective increase in brake pressure is implemented by means of the at least one hydraulic apparatus (10), and the second setpoint proportion of the respective increase in brake pressure is implemented by means of the brake booster (12) (S4) .

9. Method according to Claim 8, wherein as the at least one first information item (22) it is at least determined whether at least one first supply current is made available to the at least one hydraulic apparatus (10), and/or as the at least one second information item (24) it is at least determined whether a second supply current is made available to the brake booster (12).

10. Method according to Claim 8 or 9, wherein as the at least one first information item (22) it is at least determined whether a first energy source (38) of the vehicle, which energy source is connected to the at least one hydraulic apparatus (10) via a first power supply grid (36), has failed, and/or as the at least one second information item (24) it is at least determined whether a second energy source (42) of the vehicle, which energy source is connected to the brake booster (12) via a second power supply grid (40) has failed.

11. Method according to one of Claims 8 to 10, wherein it is additionally decided whether a stationary state of the vehicle is secured (S5) by means of an automatic parking brake (44) or by locking a transmission of the vehicle by means of a parking pawl (46).

12. Method for automatically driving a vehicle, having the steps:
defining a setpoint trajectory of the driving vehicle taking into account at least one sensor signal of at least one surroundings sensing sensor of the vehicle (S01);
defining a braking specification (16) to the brake system of the vehicle taking into account the defined setpoint trajectory and a current speed of the vehicle (S02); and
implementing the braking specification (16) by operating the brake system according to one of Claims 8 to 11.

## Revendications

1. Système de freinage pour un véhicule, comportant :
au moins un cylindre de frein de roue ;
au moins un dispositif hydraulique (10) ; et
un dispositif de commande (14) pour au moins le système de freinage comportant un dispositif électronique (15), lequel est conçu pour commander l'au moins un dispositif hydraulique (10) du système de freinage au moins en tenant compte d'une prescription de freinage (16) d'un conducteur du véhicule ou d'un système automatique de commande (18) du véhicule, de sorte qu'au moins une augmentation de pression de freinage puisse être provoquée dans l'au moins un cylindre de frein de roue du système de freinage de manière correspondante à la prescription de freinage (16) au moins au moyen de l'au moins un dispositif hydraulique (10) ;
**caractérisé par**
un servofrein (12) ;
le dispositif électronique (15) étant conçu, en tenant compte de la prescription de freinage (16) et en tenant compte en outre d'au moins une première information (22) concernant une aptitude au fonctionnement actuelle de l'au moins un dispositif hydraulique (10) et d'au moins une deuxième information (24) concernant une aptitude au fonctionnement actuelle d'un servofrein (12) du système de freinage, pour décider à raison de quelle première partie de consigne l'augmentation de pression de freinage respective doit être réalisée au moyen de l'au moins un dispositif hydraulique (10) et à raison de quelle deuxième partie de consigne l'augmentation de pression de freinage respective doit être réalisée au moyen du servofrein (12), et pour commander l'au moins un dispositif hydraulique (10) et/ou le servofrein (10) de telle sorte que l'augmentation de pression de freinage respective puisse être réalisée à raison de la première partie de consigne au moyen de l'au moins un dispositif hydraulique (10) et à raison de la deuxième partie de consigne au moyen du servofrein (12).

2. Système de freinage selon la revendication 1, dans lequel le dispositif électronique (15) est au moins conçu, en tenant compte de la prescription de freinage (16), de l'au moins une première information (22) et de l'au moins une deuxième information (24), pour décider sélectivement si l'augmentation de pression de freinage respective doit être réalisée à raison de 100% au moyen de l'au moins un dispositif hydraulique (10) et à raison de 0% au moyen du servofrein (12) ou à raison de 0% au moyen de l'au moins un dispositif hydraulique (10) et à raison de 100% au moyen du servofrein (12).

3. Système de freinage selon la revendication 1 ou 2, dans lequel le dispositif électronique (15) est conçu, au moins en tenant compte d'un premier signal concernant une fourniture d'au moins un premier courant d'alimentation à l'au moins un dispositif hydraulique (10) en tant qu'au moins une première information (22) et/ou d'un deuxième signal concernant une fourniture d'un deuxième courant d'alimentation au servofrein (12) en tant qu'au moins une deuxième information (24), pour décider à raison de quelle première partie de consigne l'augmentation de pression de freinage respective doit être réalisée au moyen de l'au moins un dispositif hydraulique (10) et à raison de quelle deuxième partie de consigne l'augmentation de pression de freinage respective doit être réalisée au moyen du servofrein (12).

4. Système de freinage selon l'une des revendications précédentes, dans lequel l'au moins un dispositif hydraulique (10) est intégré dans un système ESP (34) du système de freinage, et dans lequel une première unité secondaire du dispositif de commande (14) est intégrée dans un dispositif de commande ESP du système ESP (34) et une deuxième unité secondaire du dispositif de commande (14) est intégrée dans un dispositif de commande du servofrein (12).

5. Système de freinage selon l'une des revendications précédentes, dans lequel l'au moins un dispositif hydraulique (10) est connecté à un premier réseau d'alimentation en courant ou une première partie de réseau d'alimentation en courant (36) réalisé(e) dans le système de freinage, réseau ou partie de réseau par le biais duquel/de laquelle l'au moins un dispositif hydraulique (10) peut être connecté ou est connecté à une première source d'énergie (38) du véhicule, et le servofrein (12) est connecté à un deuxième réseau d'alimentation en courant ou une deuxième partie de réseau d'alimentation en courant (40) réalisé(e) dans le système de freinage, réseau ou partie de réseau par le biais duquel/de laquelle le servofrein (12) peut être connecté ou est connecté à une deuxième source d'énergie (42) du véhicule.

6. Système de freinage selon la revendication 5, dans lequel le dispositif électronique (15) est en outre conçu pour décider si un arrêt du véhicule doit être assuré au moyen d'un frein de stationnement automatique (44) ou par verrouillage d'une transmission du véhicule au moyen d'un cliquet de stationnement (46), et pour commander de manière correspondante le frein de stationnement automatique (44) ou le cliquet de stationnement (46), et dans lequel le frein de stationnement automatique (44) est connecté également au premier réseau d'alimentation en courant ou à la première partie de réseau d'alimentation en courant (36), et le cliquet de stationnement (46) est connecté également au deuxième réseau d'alimentation en courant ou à la deuxième partie de réseau d'alimentation en courant (40).

7. Véhicule, lequel est conçu pour la conduite automatisée, comportant :
un système de freinage selon l'une des revendications précédentes ; et
le système automatique de commande (18), lequel est conçu, en tenant compte d'au moins un signal de capteur d'au moins un capteur de détection d'environnement du véhicule, pour déterminer une trajectoire de consigne du véhicule et, sur la base de la trajectoire de consigne déterminée et d'une vitesse actuelle du véhicule, pour déterminer la prescription de freinage (16) et la délivrer au dispositif de commande (14).

8. Procédé permettant de faire fonctionner un système de freinage d'un véhicule, comportant l'étape :
commander au moins un dispositif hydraulique (10) du système de freinage au moins en tenant compte d'une prescription de freinage (16) d'un conducteur du véhicule ou d'un système automatique de commande (18) du véhicule, de sorte qu'au moins une augmentation de pression de freinage soit provoquée dans au moins un cylindre de frein de roue du système de freinage de manière correspondante à la prescription de freinage (16) au moins au moyen de l'au moins un dispositif hydraulique (10) ;
**caractérisé par** les étapes :
déterminer au moins une première information (22) concernant une aptitude au fonctionnement actuelle de l'au moins un dispositif hydraulique (10) (S1) ;
déterminer au moins une deuxième information (24) concernant une aptitude au fonctionnement actuelle d'un servofrein (12) du système de freinage (S2) ;
décider, en tenant compte de la prescription de freinage (16) et en tenant compte en outre de l'au moins une première information (22) et de l'au moins une deuxième information (24), à raison de quelle première partie de consigne l'augmentation de pression de freinage respective doit être effectuée au moyen de l'au moins un dispositif hydraulique (10) et à raison de quelle deuxième partie de consigne l'augmentation de pression de freinage respective doit être effectuée au moyen du servofrein (12) (S3) ; et
commander l'au moins un dispositif hydraulique (10) et/ou le servofrein (12) de telle sorte que l'augmentation de pression de freinage respective soit effectuée à raison de la première partie de consigne au moyen de l'au moins un dispositif hydraulique (10) et à raison de la deuxième partie de consigne au moyen du servofrein (12) (S4).

9. Procédé selon la revendication 8, dans lequel, en tant qu'au moins une première information (22), il est au moins déterminé si au moins un premier courant d'alimentation est fourni à l'au moins un dispositif hydraulique (10), et/ou, en tant qu'au moins une deuxième information (24), il est au moins déterminé si un deuxième courant d'alimentation est fourni au servofrein (12) .

10. Procédé selon la revendication 8 ou 9, dans lequel, en tant qu'au moins une première information (22), il est au moins déterminé si une première source d'énergie (38) du véhicule, laquelle est reliée à l'au moins un dispositif hydraulique (10) par le biais d'un premier réseau d'alimentation en courant (36), est tombée en panne, et/ou, en tant qu'au moins une deuxième information (24), il est au moins déterminé si une deuxième source d'énergie (42) du véhicule, laquelle est reliée au servofrein (12) par le biais d'un deuxième réseau d'alimentation en courant (40), est tombée en panne.

11. Procédé selon l'une des revendications 8 à 10, dans lequel il est en outre décidé si un arrêt du véhicule est assuré au moyen d'un frein de stationnement automatique (44) ou par verrouillage d'une transmission du véhicule au moyen d'un cliquet de stationnement (46) (S5).

12. Procédé de conduite automatisée d'un véhicule, comportant les étapes :
déterminer une trajectoire de consigne du véhicule roulant en tenant compte d'au moins un signal de capteur d'au moins un capteur de détection d'environnement du véhicule (S01) ;
déterminer une prescription de freinage (16) au système de freinage du véhicule en tenant compte de la trajectoire de consigne déterminée et d'une vitesse actuelle du véhicule (S02) ; et
effectuer la prescription de freinage (16) par fonctionnement du système de freinage selon l'une des revendications 8 à 11.
